# EUROPÄISCHE PATENTSCHRIFT

(11) **EP 0 355 649 B1**
(45) Veröffentlichungstag und Bekanntmachung des Hinweises auf die Patenterteilung: **10.03.1993**
(21) Anmeldenummer: 89114997.3
(22) Anmeldetag: 14.08.1989
(51) Int. Cl.: F16J 15/32, F16J 15/44

(54) **Dichtungseinrichtung**
Sealing device
Dispositif de joint

(30) Priorität: 20.08.1988 DE 3828363
(43) Veröffentlichungstag der Anmeldung: 28.02.1990
(73) Patentinhaber: MTU MOTOREN- UND TURBINEN-UNION MÜNCHEN GMBH, D-80976 München (DE)
(72) Erfinder: Hoffelner, Herbert, D-8062 Markt Indersdorf (DE)

(56) Entgegenhaltungen:
- EP-A- 0 199 322
- DE-C- 3 429 708
- GB-A- 1 453 500
- GB-A- 2 063 385
- GB-A- 2 076 935
- GB-A- 2 198 195
- US-E- 30 206

## Beschreibung

Die Erfindung bezieht sich auf eine Dichtungseinrichtung nach dem Oberbegriff des Patentanspruchs 1.

Aus der EP-A-0199322 ist eine Bürstendichtung zur Überbrückung eines Spaltes zwischen zwei stationären, aufgrund thermischer oder anderweitiger Verformungen und Kraftbeanspruchungen bzw. Bewegungen unterworfenen Bauteilen bekannt; dabei sollen die Borsten der Bürstendichtung am einen Ende mit dem einen Bauteil und mit dem übrigen freien Ende in einer Fuge des anderen Bauteils frei beweglich geführt sein. Im bekannnten Fall handelt es sich nicht um eine zur Abdichtung eines Radialspalts zwischen Rotor und Stator geeignete und ausgebildete Bürstendichtung.

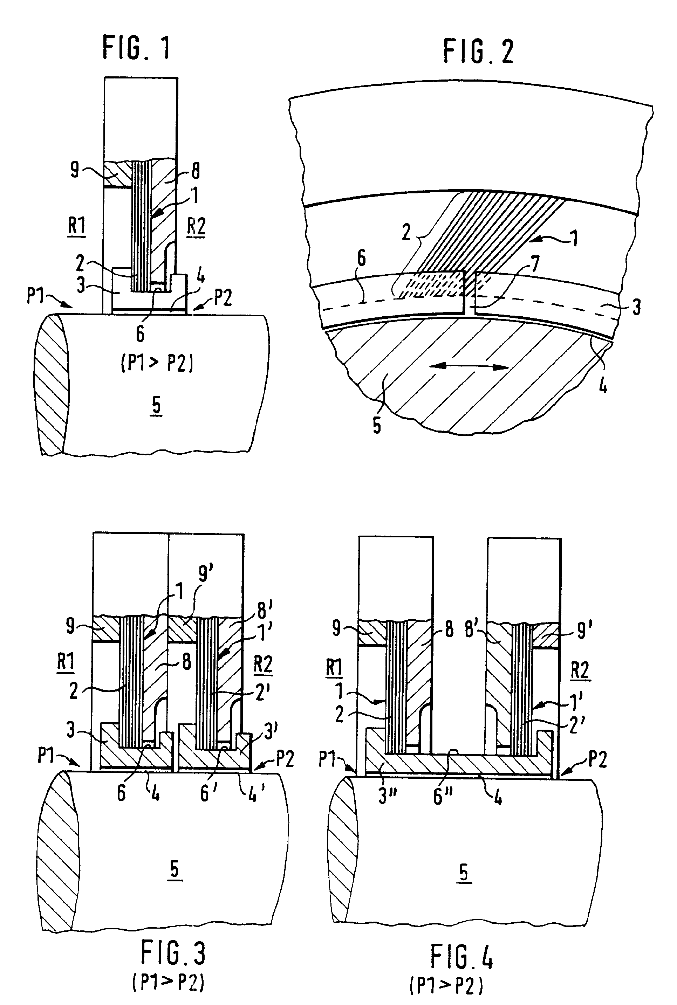

Aus der US-E-30 206 ist eine Anwendungsfall (Fig. 4) einer Bürstendichtung sowie ein Herstellungsverfahren der Dichtung (Fig. 1 bis 3) bekannt. Gemäß dem Anwendungsfall, z. B. bei einer Turbomaschine, soll das als Bürste ausgebildete Dichtelement einerseits am Stator fest verankert sein und mit dem übrigen freien Ende lose kontaktiert am Rotor aufsitzen. Auf diese Weise sollen insbesondere aus instationären Betriebszuständen thermisch verursachte Differenzdehnungen zwischen Rotor und Stator bei minimalem Dichtungsleckfluß abdichtend kompensiert werden.

Zwecks Herstellung dieser Bürstendichtung sollen im bekannten Fall zunächst Bürstenbündel zusammengefaltet, dann faltungsseitig in Bohrungen eines ersten Ringes eingesetzt und mit diesem verdrahtet werden. Die sich teilweise in Umfangsrichtung überlappenden äußeren offenen Enden der Bürstenbündel sollen dann in einer Umfangsaussparung eines dem ersten koaxial zugeordneten zweiten Ringes verklemmt und dort eingeschweißt werden. Als Folge mittenkoaxialen Durchschneidens der Bürstenbündel soll dann der die Faltungen enthaltende Bürstenrest einschließlich des ersten Ringes gänzlich entfernt werden, so daß der übrige am zweiten Ring fest eingebundene Bürstenrest die schon besprochene Bürstendichtung (Fig. 4) mit nach außen freien, am Rotor ungeführt aufsitzenden Borstenenden ausbildet.

In der praktischen Anwendung liegt der wesentliche Vorteil einer derartigen Bürstendichtung zwischen Rotor und Stator darin, daß sie insbesondere im Hinblick auf instationäre Betriebszustände einer Turbomaschine, z. B. eines Gasturbinentriebwerks, in der Lage ist, thermisch bedingte Radialspaltänderungen zwischen dem Stator und dem Rotor zu kompensieren, ohne daß - wie z. B. bei herkömmlichen Labyrinthdichtungen üblich - mit unmittelbaren Materialkontaktierungen (Materialverschleiß, im Extremfall: Bruchgefahren) der Dichtung gerechnet werden muß. Durch eine ständige Reibkontaktierung unterliegt aber auch eine Bürstendichtung sowie deren betreffende Gegenfläche (Rotor) nicht unerheblichem Materialverschleiß, wozu unter anderem besondere rotorseitige Belagaufträge vorgeschlagen wurden. In jedem dieser Fälle muß aber mit Bürstenabrieb bzw. Belagabrieb gerechnet werden, der zu nicht unerheblichen Verunreinigungen der abzudichtenden Medien führt. Qualität, Verschleiß und Abrieb der Bürstendichtung hängen unter anderem wiederum sehr stark von der Materialwahl für die Borsten der Dichtung ab; hierzu sind schon örtlich unterschiedliche Borstenmaterialien in dem Sinne bekannt, einen federnden Borstenkern (Glas, Metall, Kunststoff) mit möglichst abriebfesten aber materialseitig hochwertigen und teueren Werkstoffen (z. B. Gold, Silber, Nickel) in komplizierten Beschichtungsverfahren (PVD, CVD) zu beschichten (DE-G 3429708).

Ferner sind radiale Gleitringdichtungen,für sich bekannt, die grundsätzlich aus einem Gehäuse, dem Gleitring, einem in axialer Richtung federnden Element und der dazugehörigen Welle bzw. dem dazugehörenden Wellenabschnitt aufgebaut sind. Dabei ist der Gleitring zwischen einer Tragschulter des Gehäuses auf der einen Seite und einer z. B. beweglichen Federplatte auf der anderen Seite mit Wirkung des Federelements abdichtend im Gehäuse geführt (Sekundärdichtung); als Primärdichtung soll ein verhältnismäßig kleiner radialer Dichtspalt zwischen dem Gleitring und der Welle eingehalten werden können.

Neben einem vergleichsweise aufwendigen und störanfälligen Aufbau sind derartige Gleitringdichtungen mit dem Nachteil eines vergleichsweise großen Dichtungsleckflusses verknüpft, insbesondere, wenn im Hinblick auf instationäre Betriebszustände vergleichsweise große Radialspalte (Primärdichtung) einkalkuliert werden müssen, um wiederum einem durch gegenseitige Materialkontaktierung (Gleitring/Welle) hervorgerufenen Verschleiß entgegenzuwirken.

Derartige radiale Gleitringdichtungen können jedoch insbesondere dann keine einwandfreien Dichtvoraussetzungen erfüllen, wenn es darum geht, z. B. Lagerräume in Gasturbinen gegen den Triebwerkseinlauf bzw. die örtliche Umgebung (Umgebungsluft) oder gegen den Abgasstrom abzudichten, also Lagerräume, die üblicherweise ein wesentlich niedrigeres Druckniveau haben als der Lagerraum vor der Dichtung.

Zur Behebung dieses Mangels schon vorgeschlagene Gleitringdichtungskonzepte in Mehrfachanordnung hintereinander (Labyrinthbauweise) haben zudem den weiteren Nachteil eines nicht unerheblichen Einbau-Raum-Bedarfs.

Der Erfindung liegt die Aufgabe zugrunde, eine Dichtungseinrichtung nach der eingangs genannten Art (Oberbegriff des Anspruchs 1) anzugeben, die unter Ausnutzung der Vorteile eines Bürstendichtungskonzepts unter anderem hinsichtlich Federung und Dämpfung, praktisch verschleiß-, und damit abrieblos arbeitet. Im Rahmen der Aufgabe soll mithin eine Dichtungseinrichtung angegeben werden, die unter einwandfreier Abdichtung von durch Medien wie Flüssigkeiten und/oder Gasen mit vergleichsweise hohen Differenzdrücken beaufschlagten Räumen geeignet ist und sich dabei durch ein vergleichsweise geringes Einbauvolumen und einen vergleichsweise einfachen und nicht störungsanfälligen Aufbau auszeichnet.

Die gestellte Aufgabe ist gemäß Kennzeichnungsteil des Patenanspruchs 1 erfindungsgemäß gelöst; dabei ergibt sich eine vorteilhafte Kombination aus Bürstendichtung und radialer Gleitringdichtung. Die Dichtungseinrichtung ist so aufgebaut, daß der Maschinenrotor (Welle) mit z. B. einem Gleitring die primäre Dichtstelle (Primärdichtung) ausbildet. Der Gleitring ist am Umfang an mindestens einer Stelle durch einen Schlitz geteilt und am Innendurchmesser der Borsten der Bürstendichtung federnd gelagert. Däbei bildet er mit dem Bürstenpaket die sekundäre Dichtstelle (Sekundärdichtung) aus. Durch geringe Überdeckung der Borsten der Bürstendichtung an deren freien Borstenenden bzw. am Innendurchmesser kann der Gleitring im Stillstand am Wellenumfang anliegen.

Bei rotierender Welle kann sich also im radialen Dichtspalt der Primärdichtung ein aerodynamischer Druck (Druckpolster) aufbauen, der die Reibverluste des Gleitringes klein hält. Radiale Rotorauslenkungen werden über die als Federelement ausgebildeten Borsten der Bürstendichtung aufgenommen und gedämpft.

Grundsätzlich sind beide Drehrichtungen der Welle möglich. Der Gleitring wird dabei durch die Reibkräfte der Borsten am Mitdrehen gehindert. Er kann aber bei Rotation der Welle in Richtung der jeweiligen Bürstenanstellung bzw. des jeweiligen Bürstenanstellwinkels langsam in Drehrichtung wandern. Mit "Bürstenanstellung" ist gemeint, daß die Borsten der Bürstendichtung in Bezug auf eine Längsmittelebene der Maschine unter einem von oben außen nach innen unten geneigten Schnittwinkel zu dieser Ebene über dem Umfang angeordnet sind. Der abzudichtende Druck bewirkt eine axiale Anlage des Gleitringes am Bürstenpaket. Dadurch wird neben der höheren Reibkraft eine optimale Packungsdichte der Bürstendichtung erzielt, was sich sehr günstig auf die Leckage der Dichtung (Sekundärdichtung) auswirkt.

Zur Beherrschung vergleichsweise hoher Druckdifferenzen können mehrere Dichtungen nebeneinander angeordnet sein. Durch die Ausführung des Gleitringes kann wechselnde Druckbeaufschlagung an der Dichtungseinrichtung beherrscht werden.

Mit der Dichtungseinrichtung ergeben sich für die Herstellung und das Betriebsverhalten folgende Vorteile:

### Einfachere und kostengünstigere Herstellung der Bürstendichtung

Bei einer konventionell aufgebauten Bürstendichtung (siehe: US-E-30 206) muß großer Wert auf die Packungsdichtung der Borsten gelegt werden. Dies entfällt nun, da im Wege des Differenzdrucks über den Gleitring an den Borsten der Bürstendichtung eine gute Packungsdichte erzielt wird.

Die Borstenenden brauchen nicht mehr geschliffen zu werden. Der Bürstendurchmesser kann durch Stanzen oder Erodieren auf Maß gebracht werden.

Da die Bürste kein rotierendes Bauteil berührt, genügt die Auswahl einer geringeren Materialqualität.

Der Anstellwinkel der Borsten der Bürstendichtung kann verhältnismäßig klein gewählt sein und einen gegenüber konventionellen Konzepten größeren Toleranzbereich aufweisen.

### Einfachere und kostengünstigere Herstellung der Rotoroberfläche

Keramische Anlaufbeläge entfallen; keine Verunreinigung z. B. des Öles bei Lagerkammerdichtungen durch keramischen Abrieb; es genügt eine gehärtete, nitrierte oder verchromte Oberfläche.

### Erleichterte Handhabung ("Handling")

Durch den Gleitring sind die freien Borstenenden gut geschützt.

Grundsätzlich sind bei der Montage und im Betrieb beide Drehrichtungen möglich.

### Kostengünstigere Instandsetzung der Dichtung

Die Bürste unterliegt keinem Verschleiß.

Der Gleitring ist kostengünstig herzustellen und leicht austauschbar.

### Optimales Betriebsverhalten

Zwischen Gleitring und Welle baut sich ein aerodynamischer Druck auf, der die Reibungsverluste stark reduziert. Durch den über mindestens einen Schlitz geteilten Gleitring kann sich der Spalt selbst einstellen (Primärdichtung).

Die Borsten der Bürstendichtung dienen als Sekundärdichtung und als Feder/Dämpfer;

Federung/Dämpfung können optimal eingestellt werden, und zwar durch eine z. B. unterschiedliche Packungsdichte der Borsten (Überlappungsdichte der freien Borstenenden am Innendurchmesser der Bürstendichtung, Vorgabe des eingangs definierten Borstenanstellwinkels bzw. variable Packungsdichte bzw. vorgegebene Borstenanzahl in Bezug auf den äußeren und inneren Durchmesser der Borsten der Bürstendichtung).

Anhand der Zeichnungen ist die Erfindung beispielsweise weiter erläutert; es zeigen:
Fig. 1: eine teilweise entlang der Mittellängsebene einer Turbomaschine aufgeschnitten dargestellte Ansicht der Dichtungseinrichtung in einer ersten Ausführungsform,
Fig. 2: die vordere Stirnansicht der Einrichtung nach Fig. 1 als Schnitt nebst zugeordneter Querschnittspartie der Welle,
Fig. 3: eine teilweise entlang der Mittellängsachse einer Turbomaschine aufgeschnitten dargestellte Ansicht der Dichtungseinrichtung in einer zweiten Ausführungsform unter Verdeutlichung einer zur Beherrschung verhältnismäßig großer Druckdifferenzen labyrinthartig hintereinandergeschalteten Dichtung mit zwei aufeinanderfolgenden Gleitringen und
Fig. 4: eine teilweise entlang der Mittellängsachse einer Turbomaschine aufgeschnitten dargestellte Ansicht der Einrichtung in einer dritten Ausführungsform unter Verdeutlichung einer differenzdruckbetätigten Doppelsekundärdichtung in Kombination mit einem gemeinsamen Gleitring (Primärdichtung).

Fig. 1 veranschaulicht eine erste Ausführungsform einer Dichtungseinrichtung zwischen Maschinenräumen R1, R2, die fluidisch und/oder aerodynamisch unterschiedlich druckbeaufschlagt sind; das vorliegende sowie die nächstfolgenden Ausführungsformen der Erfindung nach Fig. 3 und 4 sind geeignet für Turbomaschinen, insbesondere hier für ein Gasturbinentriebwerk, wobei mindestens eine statorseitig drehfest verankerte Bürstendichtung 1 vorgesehen ist, deren freie Borstenenden (Borsten 2) in einen Gleitring 3 abdichtend hineinragen (Sekundärdichtung). Unter Belassung eines Radialspalts 4 (Primärdichtung) ist der betreffende Gleitring 3 im wesentlich koaxial zur nicht weiter dargestellten Längsachse der betreffenden Maschinenrotors 5 bzw. einer Welle angeordnet. Es ist also die betreffende Bürstendichtung 1 als radiale Gleitringdichtung ausgebildet.

In genauerer Interpretation sind also die freien Enden der Borsten 2 unter Ausbildung einer Sekundärdichtung in einer Umfangsnut 6 eines an einer Umfangsstelle 7 durch einen Schlitz radial geteilten Gleitringes 3 geführt, wobei der Gleitring 3 auf der von den Borsten 2 abgewandten Seite am Radialspalt 4 eine selbstzentrierende Primärdichtung am Maschinenrotor 5 ausbildet.

Grundlage für die wirksame Funktion der Dichtungeinrichtung nach Fig. 1 und Fig. 2 ist es, daß stets der im Raum R1 vor der Dichtung herrschende Fluid- oder Umgebungsdruck größer als derjenige ist, der im Raum R2 hinter der Dichtung herrscht (P1 > P2).

Zweckmäßig und vorteilhaft sollen die Borsten 2 der Bürstendichtung 1 in der Kombination aus Federung und Dämpfung ausgebildet und angeordnet sein.

Für die wirksame Funktion, insbesondere im Hinblick auf verhältnismäßig große Differenzdrücke, sei zugrunde gelegt, daß für die freien Enden der Borsten 2 eine über dem Umfang derartige Borstendichte oder -überdeckung gewählt ist, daß der Gleitring 3 im Stillstand am Umfang des Maschinenrotors 5 anliegt.

Wie in weiterer Ausgestaltung insbesondere aus Fig. 2 entnommen werden kann, können die Borsten 2 der Bürstendichtung 1 in Bezug auf eine Längsmittelebene der Maschine unter einem von oben außen nach innen unten geneigten Schnitt-Winkel zu dieser Ebene angeordnet und mit den freien Borstenenden axial und radial federnd am Gleitring 3 abgestützt sein.

Wie ferner auf Fig. 1 und 2 unter anderem entnommen werden kann, ist die Bürstendichtung 1 bezüglich der inneren Enden der Borsten 2 zwischen einem stationären hier hinteren Dichtungsbauteil 8 auf der einen Seite und einem hier vorderen, radial außenliegenden Statorabschnitt 9 auf der anderen Seite gehaltert, der im wesentlichen zur Achse des Maschinenrotors 5 konzentrisch und radial mit Abstand gegenüber dem Gleitring 3 angeordnet ist.

Man erkennt also aus Fig. 1 und 2, daß die Borsten 2 der Bürstendichtung 1 über den Gleitring 3 mit Wirkung des Differenzdruckes P1 > P2 zwischen beiden Maschinenräumen R1, R2 in axialer Richtung gegen eine Anlagefläche des stationären Dichtungsbauteils 8 gedrückt sind, dessen inneres Ende, das zusammen mit den freien Borstenenden in die Umfangsnut 6 hineinragt, zur letzteren hin axial und radial beabstandet angeordnet ist.

Bei einer zweiten Ausführungsform der Dichtungseinrichtung (Fig. 3) sollen hier zwei labyrinthartig mit Abstand zueinander angeordnete Gleitringe 3, 3′ in Kombination einer Doppelbürstendichtung 1, 1′ in die jeweilige Umfangsnut 6, 6′ des betreffenden zugehörigen Gleitringes 3, 3′ hineinragen. Es ergibt sich demnach hier eine Doppelkombination aus Bürstendichtung und Gleitringdichtung. Dabei sind jeweils ein stationäres Dichtungsbauteil 8, 8′ mit einem darauffolgenden Statorabschnitt 9, 9′ unter gegenseitiger örtlicher Flächenkontaktierung drehfest angeordnet bzw. miteinander verbunden. Es sind dabei also die äußeren Enden der Borsten 2 der Bürstendichtung 1 örtlich und über dem Umfang zwischen dem vorderen stationären Dichtungsbauteil 9 und dem hinteren Statorabschnitt 8 gefaßt und gehaltert. Dies gilt sinngemäß sowohl für die zuvor behandelte Ausführungsform nach Fig. 3 wie aber auch schon für die besprochene Ausführungsform nach Fig. 1 sinngemäß. Die betreffende Radialspaltdichtung nach Fig. 3 wird also zwischen den betreffenden Gleitringen 3, 3′ und dem äußeren Umfang des Maschinenrotors 5 ausgebildet, und zwar ausgedrückt durch die betreffenden primären Dichtungsspalte 4, 4′.

Gemäß Fig. 1 oder Fig. 3 besteht im Übrigen die Möglichkeit, die statorseitige Bürstenverankerung, also das stationäre Dichtungsbauteil 8 auf der einen Seite und den ringförmigen Statorabschnitt 9 auf der anderen Seite als zu einer gemeinsamen Baueinheit gehörig aufzufassen oder aber diese Statorbauteile getrennt zu fertigen und dann zwecks Fassung der äußeren Enden der Borsten 2 miteinander in geeigneter Weise zu verbinden.

Fig. 4 veranschaulicht eine weitere Variante,bei der zwei stationäre Dichtungsbauteile 8, 8′ mit Abstand einander gegenüberliegend gehaltert und angeordnet sind und welche in die Umfangsnut 6˝ eines gemeinsamen Gleitringes 3˝ so eingreifen, daß die freien Borstenenden zweier Bürstendichtungen 1, 1′ jeweils an einer Außenseite von der betreffenden Umfangsnut 6˝ gefaßt sind; im Betrieb wird also der Gleitring 3˝ über den Differenzdruck P1 > P2 gegen das hier eine (8) der beiden Statordichtungsbauteile 8, 8′ gedrückt. Gemäß dem in Fig. 4 auf der rechten Seite befindlichen Bürstendichtungskonzept (Sekundärdichtung) wird dabei im Betrieb aufgrund der herrschenden Druckdifferenz P1 > P2 die auf der rechten Seite befindliche Bürstendichtung 1′ nebst Borsten 2′ gegen die betreffende Innenfläche des stationären Dichtungsbauteils (Platte) 8′ gedrückt.

Gemäß einer weiteren Variante sieht die Erfindung (Anspruch 8) eine Einrichtung vor, die unter Anwendung einer oder mehrerer Bürsten nebst einem oder mehreren Gleitringen ein radiales, aerodynamisches Luftlager ausbilden soll. Dieser vorteilhaften Variante gehen folgende Überlegungen zum Stand der Technik voraus.

Radiale Gleitlager wie aber auch radiale Kugellager, bestehend aus einem äußeren und einem inneren Käfig oder aber auch sogenannte "quasi-starre" Radiallager haben den Nachteil einer verhältnismäßig geringen thermischen Kompatibilität zwischen dem Rotor auf der einen Seite und dem Stator auf der anderen Seite bzw. zwischen zwei koaxialen Wellen eines beispielsweise mehrwelligen Turbinenstrahltriebwerks für Flugzeuge.

Im Rahmen der genannten Lagerungsproblematik wird ferner ein betriebsbedingtes verhältnismäßig großes .Auswandern bzw. Auspendeln der betreffenden Rotorachsen aus der "normalen" Rotorachsposition nur verhältnismäßig unzureichend beherrscht.

Unter anderem zur Schwingungsdämpfung schon vorgeschlagene äußere Druckgas- bzw. Druckfluidpolster zwischen Außenkäfig und angrenzendem Stator oder einer Welle sind extrem kompliziert aufgebaut und reichen im allgemeinen noch nicht aus, extreme Bedingungen auch bezüglich Temperaturdifferenzen, Rotorwanderungen oder hinsichtlich eines örtlichen Lagerverschleißes zufriedenstellend in den Griff zu bekommen. Desweiteren sind z. B. bei hochbeanspruchten Kugellagern zusätzlich besondere Druckumlaufschmierungen zur örtlichen Temperatur- und Verschleißminimierung bekannt.

Zur Vermeidung der erwähnten Nachteile zu Bekanntem sieht die Variante (Anspruch 8) vor, daß neben den zuvor schon erwähnten Merkmalen zunächst die Bürsten bzw. Borsten ausschließlich die Steifigkeit, Federung und Dämpfung eines Luftlagers bestimmende Elemente sind.

Dieser Variante eines Luftlagers können sämtliche Ausführungsformen nach Fig. 1 bis 4 in zuvor beschriebener Weise insoweit zugeordnet werden, als die betreffenden Borsten 2 der Bürstendichtungen keine sogenannte sekundäre Dichtfunktion übeinehmen müssen. Die betreffenden Borsten 2 der Bürstendichtungen 1 müssen also lediglich nach den Kriterien der Steifigkeit, Federung und Dämpfung des Lagers ausgewählt werden. Insoweit ist die Erfindung im Rahmen der Patentansprüche 1 bis 7 auch dieser Erfindung (Anspruch 8) zuordenbar.

In einer weiteren Variante des zuvor erwähnten Luftlagers besteht selbsverständlich die Möglichkeit, wie im Rahmen der Ansprüche 1 bis 7 dargestellt sowie durch die Figuren 1 bis 4 erläutert und beschrieben, eine Kombination aus Luftlager mit betreffenden Bürstendichtungen 1 vorzusehen, d. h. eine vorteilhafte Kombination aus Luftlager nebst Bürstendichtungen als Sekundärdichtungen in Kombination wiederum mit den gemäß Fig. 1 bis 4 gezeigten und erläuterten Ausführungsformen, die unterschiedlichen Druckes P1 > P2 beaufschlagte und durch die betreffenden Dichtungen voneinander abgeschirmte Räumlichkeiten R1, R2 beinhaltet.

Gemäß dem Gedanken eines Luftlagers nach Anspruch 8 in Kombination mit den genannten Ausgestaltungen können die Vorteile des Bürstendichtungskonzepts (Sekundärdichtung) voll zum Tragen kommen.

## Patentansprüche

1. Dichtungseinrichtung zwischen Maschinenräumen (R1, R2), die fluidisch und/oder aerodynamisch unterschiedlich druckbeaufschlagt sind, insbesondere für Turbomaschinen, wie Gasturbinentriebwerke, unter Verwendung mindestens einer statorseitig drehfest verankerten Bürstendichtung (1), deren freie Borstenenden in Richtung auf einen Maschinenrotor (5) geführt sind, dadurch gekennzeichnet, daß die freien Enden der Borsten (2) in einer Umfangsnut (6) eines an mindestens einer Umfangsstelle (7) durch einen Schlitz geteilten Gleitringes (3) abdichtend geführt sind, der einen gegenüber dem Maschinenrotor (5) belassenen Radialspalt (4) selbstzentrierend abdichtet.

2. Einrichtung nach Anspruch 1, dadurch gekennzeichnet, daß für die freien Enden der Borsten (2) eine über dem Umfang derartige Borstendichte oder -überdeckung gewählt ist, daß der Gleitring (3) im Stillstand am Umfang des Maschinenrotors (5) anliegt.

3. Einrichtung nach Anspruch 1 oder 2, dadurch gekennzeichnet, daß die Borsten (2) der Bürstendichtung (1) in Bezug auf eine Längsmittelebene der Maschine unter einem von oben außen nach innen unten geneigten Schnitt-Winkel zu dieser Ebene über dem Umfang angeordnet und mit den freien Borstenenden axial und radial federnd am Gleitring (3) abgestützt sind.

4. Einrichtung nach einem oder mehreren der Ansprüche 1 bis 3, dadurch gekennzeichnet, daß die Borsten (2) der Bürstendichtung (1) über den Gleitring (3) mit Wirkung des Differenzdruckes (P1 > P2) zwischen beiden Maschinenräumen (R1, R2) in axialer Richtung gegen eine Anlagefläche eines stationären Dichtungsbauteils (8) gedrückt sind, dessen inneres Ende, das zusammen mit den freien Borstenenden in der Umfangsnut (6) sitzt, zur letzteren hin axial und radial beabstandet angeordnet ist.

5. Einrichtung nach einem oder mehreren der Ansprüche 1 bis 4, dadurch gekennzeichnet, daß die Bürstendichtung (1) bezüglich der inneren Enden der Borsten (2) zwischen dem stationären Dichtungsbauteil (8) auf der einen und einem radial außen liegenden ringförmigen Statorabschnitt (9) auf der anderen Seite gehaltert ist, der im wesentlichen konzentrisch zur Achse des Maschinenrotors (5) und radial mit Abstand gegenüber dem Gleitring (3) angeordnet ist.

6. Einrichtung nach einem oder mehreren der Ansprüche 1 bis 5, gekennzeichnet durch mindestens zwei labyrinthartig mit Abstand der betreffenden Gleitringe (3, 3′) aufeinanderfolgende Dichtungen in der jeweiligen Kombination aus Bürsten- und Gleitringdichtung, worin jeweils ein stationäres Dichtungsbauteil (8) mit einem darauffolgenden Statorabschnitt (9′) unter gegenseitiger örtlicher Flächenkontaktierung drehfest angeordnet oder miteinander verbunden sind.

7. Einrichtung nach einem oder mehreren der Ansprüche 1 bis 6, dadurch gekennzeichnet, daß mindestens zwei stationäre Dichtungsbauteile (8, 8′) mit Abstand einander gegenüberliegend in die Umfangsnut (6˝) eines gemeinsamen Gleitringes (3˝) so eingreifen, daß die freien Borstenenden zweier Bürstendichtungen (1, 1′) jeweils an einer Außenseite von der Nut (6˝) gefaßt sind, wobei der Gleitring (3˝) über den Differenzdruck (P1 > P2) jeweils gegen das zugehörige eine der beiden stationären Dichtungsbauteile (8, 8′) gedrückt ist.

8. Einrichtung nach einem oder mehreren der Ansprüche 1 bis 7, dadurch gekennzeichnet, daß sie unter Anwendung einer oder mehrerer Bürsten nebst einem oder mehreren Gleitringen ein radiales aerodynamisches Luftlager ausbildet, wobei die Bürsten bzw. Borsten entweder ausschließlich die Steifigkeit, Federung und Dämpfung des Lagers bestimmende Elemente sind oder die Steifigkeit, Federung und Dämpfung sowie eine Sekundärdichtung bewirkende Elemente zwischen unterschiedlich fluidisch druckbeaufschlagten Räumen der Maschine sind.

## Claims

1. A sealing device between machine spaces (R1, R2) which are under different fluid and/or aerodynamic pressure, in particular for turbomachines, such as gas turbine engines, using at least one brush seal (1) anchored in a rotationally fixed manner on the stator side, the free bristle ends of the said brush seal being guided in the direction of a machine rotor (5), characterised in that the free ends of the bristles (2) are sealingly guided in a circumferential groove (6) of a sliding ring (3) divided by a slot at at least one point (7) on the circumference, the said sliding ring sealing, in a self-centering manner, a radial gap (4) remaining at the machine rotor (5).

2. A device according to claim 1, characterised in that for the free ends of the bristles (2), a bristle thickness or covering is selected over the circumference such that the sliding ring (3) lies on the circumference of the machine rotor (5) when at a standstill.

3. A device according to claim 1 or 2, characterised in that in relation to a longitudinal centre plane of the machine, the bristles (2) of the brush seal (1) are arranged over the circumference at an intersection angle to this plane inclined from outside above towards the inside below, and the free bristle ends are supported on the sliding ring (3) in an axially and radially resilient manner.

4. A device according to one or more of claims 1 to 3, characterised in that the bristles (2) of the brush seal (1) are pressed against a contact surface of a stationary sealing component (8) by means of the sliding ring (3) under the effect of the differential pressure (P1 > P2) between the two machine spaces (R1, R2) in the axial direction, the inner end of the said sealing component being located together with the free bristle ends in the circumferential groove (6) and being arranged at an axial and radial distance from the latter.

5. A device according to one or more of claims 1 to 4, characterised in that the brush seal (1), with respect to the inner ends of the bristles (2), is held between the stationary sealing component (8) on one side and an annular stator portion (9) located radially outwards on the other, the said stator portion being arranged substantially concentrically to the axis of the machine rotor (5) and at a radial distance from the sliding ring (3).

6. A device according to one or more of claims 1 to 5, characterised by at least two successive seals in the manner of a labyrinth with the relevant sliding rings (3, 3′) being at a distance in the respective combination of brush seal and sliding ring seal, wherein in each case a stationary sealing component (8) and a succeeding stator portion (9′) having mutual local surface contact are arranged so as to be rotationally fixed or are connected to each other.

7. A device according to one or more of claims 1 to 6, characterised in that at least two stationary sealing components (8, 8′), opposing each other at a distance, engage in the circumferential groove (6˝) of a common sliding ring (3˝) in such a way that the free bristle ends of two brush seals (1, 1′) are held in each case on an outer surface of the groove (6˝), the sliding ring (3˝) being pressed against the associated one of the two stationary sealing components (8, 8′) by means of the differential pressure (P1 > P2).

8. A device according to one or more of claims 1 to 7, characterised in that with the use of one or more brushes and one or more sliding rings, it forms a radial, aerodynamic air bearing, the brushes or bristles being either elements determining exclusively the rigidity, resilience and damping of the bearing, or elements producing rigidity, resilience and damping and also secondary sealing and being located between spaces of the machine under different fluid pressure.

## Revendications

1. Dispositif de joint monté entre des espaces (R1, R2) d'une machine, lesdits espaces étant soumis à des pressions de fluide et/ou aérodynamiques différentes, ledit dispositif de joint étant destiné en particulier à des turbomachines, comme à des groupes propulseurs de turbine à gaz, au moins un joint-brosse (1) immobilisé en rotation côté stator étant prévu, les extrémités libres des poils dudit joint-brosse (1) étant guidées en direction d'un rotor (5) de la machine, caractérisé en ce que les extrémités libres des poils (2) sont guidées de manière étanche dans une gorge périphérique (6) d'un anneau glissant (3) qui est divisé par une fente en au moins un point périphérique (7) et qui assure l'étanchéité, avec un centrage automatique, d'un interstice radial (4) ménagé par rapport au rotor (5) de la machine.

2. Dispositif selon la revendication 1, caractérisé en ce que, pour les extrémités libres des poils (2), on choisit une densité ou un chevauchement des poils sur la périphérie de façon que, à l'arrêt, l'anneau glissant (3) soit appliqué contre la périphérie du rotor (5) de la machine.

3. Dispositif selon la revendication 1 ou 2, caractérisé en ce que, par rapport à un plan longitudinal médian de la machine, les poils (2) du joint-brosse (1) sont disposés sur la périphérie selon un angle d'intersection avec ce plan, cet angle étant incliné du haut à l'extérieur vers le bas à l'intérieur, et les extrémités libres des poils reposent contre l'anneau glissant (3) avec une élasticité axiale et radiale.

4. Dispositif selon une ou plusieurs des revendications 1 à 3, caractérisé en ce que les poils (2) du joint-brosse (1) sont poussés dans le sens axial, sur l'anneau glissant (3), sous l'effet de la pression différentielle (P1 > P2) existant entre les deux espaces (R1, R2) de la machine, contre une surface d'appui de l'élément fixe de joint (8) dont l'extrémité intérieure, qui pénètre, avec les extrémités libres des poils, dans la gorge périphérique (6), est montée avec un espacement axial et radial par rapport à cette dernière.

5. Dispositif selon une ou plusieurs des revendications 1 à 4, caractérisé en ce que les extrémités intérieures des poils (2) du joint-brosse (1) sont maintenues entre, d'une part, l'élément fixe de joint (8) et, d'autre part, une portion annulaire de stator (9) qui est disposée radialement à l'extérieur et qui est sensiblement concentrique à l'axe du rotor (5) de la machine et montée radialement à distance de l'anneau glissant (3).

6. Dispositif selon l'une des revendications 1 à 5, caractérisé par au moins deux joints successifs montés à distance des anneaux glissants correspondants (3, 3′) à la manière d'un labyrinthe selon la combinaison respective composée d'un joint-brosse et d'un joint à anneau glissant, dans laquelle un élément fixe de joint (8) et une portion adjacente de stator (9′) sont liés en rotation ou solidarisés l'un à l'autre en réalisant un contact superficiel local réciproque.

7. Dispositif selon une ou plusieurs des revendications 1 à 6, caractérisé en ce qu'au moins deux éléments fixes de joint (8, 8′), disposés en vis-à-vis à distance l'un de l'autre, s'engagent dans la gorge périphérique (6˝) d'un anneau glissant commun (3˝) de façon que les extrémités libres des poils de deux joints-brosses (1, 1′) soient appliquées contre le côté extérieur de la gorge (6˝), l'anneau glissant 3˝ étant poussé, lors du fonctionnement, par la différence de pression (P1 > P2) contre l'un des deux éléments fixes de joint (8, 8′).

8. Dispositif selon une ou plusieurs des revendications 1 à 7, caractérisé en ce que, par l'emploi d'une ou plusieurs brosses associées à un ou plusieurs anneaux glissants, il forme un palier d'air radial aérodynamique, les brosses ou les poils étant soit des éléments définissant exclusivement la rigidité, l'élasticité et l'amortissement du palier, soit des éléments réalisant la rigidité, l'élasticité et l'amortissement ainsi qu'un joint secondaire entre des espaces de la machine soumis à des pressions de fluide différentes.
